# EUROPÄISCHE PATENTSCHRIFT

(11) **EP 2 786 101 B1**
(45) Veröffentlichungstag und Bekanntmachung des Hinweises auf die Patenterteilung: **30.10.2019**
(21) Anmeldenummer: 12795767.8
(22) Anmeldetag: 21.11.2012
(51) Int. Cl.: G01F 23/36

(54) **EINRICHTUNG ZUR KONTAKTIERUNG ZUMINDEST EINER LEITERBAHN EINES FÜLLSTANDSSENSORS**
DEVICE FOR CONTACTING AT LEAST ONE CONDUCTIVE PATH OF A FILL LEVEL SENSOR
DISPOSITIF POUR CONTACTER AU MOINS UNE VOIE CONDUCTRICE D'UN CAPTEUR DE REMPLISSAGE

(30) Priorität: 30.11.2011 DE 102011087491
(43) Veröffentlichungstag der Anmeldung: 08.10.2014
(73) Patentinhaber: CPT Group GmbH, 30165 Hannover (DE)
(72) Erfinder: BENNER, Hans-Guenter, 65830 Kriftel (DE); PAUER, Bernd, 65817 Eppstein (DE); PETER, Robert, 65843 Sulzbach (DE)
(86) Internationale Anmeldenummer: PCT/EP2012/073164
(87) Internationale Veröffentlichungsnummer: WO 2013/079370

(56) Entgegenhaltungen:
- DE-A1- 19 842 243
- DE-A1-102007 021 027
- US-A1- 2004 255 669

## Beschreibung

Die Erfindung betrifft eine Einrichtung zur Kontaktierung zumindest einer Leiterbahn eines Füllstandssensors mit zumindest einem über die Leiterbahn schwenkbaren Bügel und mit einer auf dem Bügel angeordneten Kontaktfeder, mit einem von einem Federelement der Kontaktfeder gegen die Leiterbahn vorgespannten Kontakt, wobei die Bewegung des Kontaktes beim Verschwenken des Bügels einem Kreisbogen entspricht und der Kontakt einteilig mit dem Federelement der Kontaktfeder gefertigt ist.

Füllstandssensoren mit solchen Einrichtungen werden beispielsweise in Kraftstoffbehälter heutiger Kraftfahrzeuge eingesetzt und sind aus der Praxis bekannt. An dem Bügel wird meist ein Hebeldraht mit einem Schwimmer befestigt, so dass der Neigungswinkel des Bügels ein Maß für den Füllstand im Kraftstoffbehälter ist. Der Neigungswinkel wird von dem Füllstandssensor mit dem gegen die Leiterbahn vorgespannten Kontakt erfasst. Die Kontaktfeder des bekannten Füllstandssensors ist zweiteilig gestaltet, wobei ein mit dem Bügel verclipster Halter ein Federelement mit dem Kontakt trägt. Ein zweites Bauteil ist ebenfalls mit dem Bügel verclipst und hat ein zweites Federelement zur Vorspannung des Halters. Die beiden Federelemente dienen dazu, eine kippsichere und abhebefreie Vorspannung des Kontaktes gegen die Leiterbahn sicher zu stellen. Nachteilig ist jedoch der hohe bauliche Aufwand der Kontaktfeder .

Der Erfindung liegt das Problem zugrunde, eine Einrichtung der eingangs genannten Art so weiter zu bilden, dass sie besonders einfach aufgebaut ist und eine kippfreie und abhebefreie Vorspannung des Kontaktes gegen die Leiterbahn sicherstellt.

Dieses Problem wird erfindungsgemäß dadurch gelöst, dass die Kontaktfeder eine Drehlagerung an dem Bügel hat und dass die Achse der Drehlagerung parallel zur Bewegungsrichtung des Kontaktes über den Leiterbahnen angeordnet ist.

Durch diese Gestaltung ermöglicht die Drehlagerung der Kontaktfeder, dass der Kontakt mit seiner gesamten Fläche auf den Leiterbahnen aufliegt. Durch die Kombination der Drehlagerung mit dem Federelement wird erfindungsgemäß die kippfreie und abhebefreie Vorspannung des Kontaktes gegen die Leiterbahnen sichergestellt. Die Vorspannung des Kontaktes mittels des Federelementes kann daher besonders einfach gestaltet sein. Damit lässt sich die Kontaktfeder einteilig gestalten. Die erfindungsgemäße Einrichtung ist damit besonders einfach aufgebaut.

Eine besonders gleichmäßige und kippfreie Vorspannung zweier Kontakte gegen die Leiterbahn lässt sich gemäß der Erfindung dadurch erreichen, dass die Achse der Drehlagerung mit zwei, gegen eine Leiterbahn vorgespannten Kontakten ein gleichseitiges Dreieck bildet. Die Kontakte können dabei gegen eine gemeinsame Leiterbahn oder gegen zwei unabhängige Leiterbahnen vorgespannt sein.

Die erfindungsgemäße Einrichtung gestaltet sich konstruktiv besonders einfach, wenn die Kontaktfeder zwei einstückig gefertigte und in Reihe angeordnete erste und zweite Federelemente hat.

Die Kontaktfeder weist gemäß einer anderen vorteilhaften Weiterbildung der Erfindung eine hohe Stabilität auf, wenn die beiden Kontakte jeweils unmittelbar auf einem ersten Federelement angeordnet sind und wenn die ersten Federelemente über einen Quersteg miteinander verbunden sind. Weiterhin ermöglichen die beiden ersten Federelemente einen unabhängigen Ausgleich von Toleranzen der beiden Kontakte. Ein elektrischer Widerstand zwischen den beiden Kontakten wird durch den kurzen Weg über den Quersteg zudem besonders gering gehalten.

Zur Vergleichmäßigung der Vorspannung der Kontakte trägt es gemäß einer anderen vorteilhaften Weiterbildung der Erfindung bei, wenn zwei zweite Federelemente parallel zueinander geschaltet sind. Durch diese Gestaltung werden alle Federelemente auf Biegung beansprucht. Torsionsbelastungen, wie sie bei einem zentralen zweiten Federelement auftreten könnten, werden hierdurch vermieden.

Zur Erhöhung der Stabilität der erfindungsgemäßen Einrichtung trägt es bei, wenn die Kontaktfeder zwei über eine Brücke miteinander verbundene Lagerungen an dem Bügel hat. Diese Lagerungen ermöglichen auch bei einem Kippen des Bügels eine ständige parallele Auflage der Kontakte auf den Leiterbahnen.

Die Kontaktfeder lässt sich gemäß einer anderen vorteilhaften Weiterbildung der Erfindung besonders kostengünstig fertigen, wenn die Kontaktfeder Lageraugen für an dem Bügel angeordnete Lagerzapfen hat. Kontaktfeder und Bügel weisen hierdurch einen besonders geringen Verschleiß auf.

Zur Verringerung der Fertigungskosten der Kontaktfeder trägt es gemäß einer anderen vorteilhaften Weiterbildung der Erfindung bei, wenn die Kontaktfeder mit den Federelementen, den Lageraugen und den Kontakten einstückig aus Blech geformt ist. Durch diese Gestaltung kann die Kontaktfeder einfach im Stanz- und Biegeverfahren gefertigt sein, was insbesondere bei einer Serienfertigung zu besonders geringen Fertigungskosten führt.

Zur weiteren Verringerung der Gefahr des Abhebens der Kontakte trägt es gemäß einer anderen vorteilhaften Weiterbildung der Erfindung bei, wenn mehrere, parallel geschaltete Kontaktzungen der Kontakte mit unterschiedlichen Vorspannkräften gegen die Leiterbahnen vorgespannt sind. Weiterhin trägt die Parallelschaltung mehrerer Kontaktzungen zur Erhöhung der Redundanz bei.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in:
- Fig. 1: einen Füllstandssensor mit einer erfindungsgemäßen Einrichtung,
- Fig. 2: vergrößert die erfindungsgemäße Einrichtung aus Figur 1,
- Fig. 3: stark vergrößert eine Kontaktfeder der erfindungsgemäßen Einrichtung aus Figur 2.

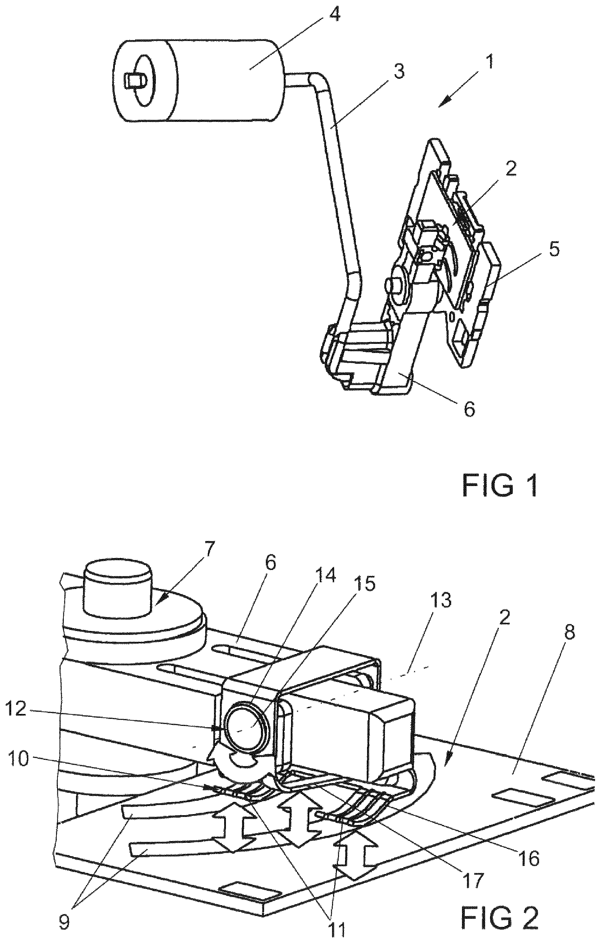

Figur 1 zeigt schematisch einen nach dem Hebelgeberprinzip arbeitenden Füllstandssensor 1 mit einem Potentiometer 2. Der Füllstandssensor 1 ist zur Erfassung eines Füllstandes an Kraftstoff und zur Montage innerhalb eines nicht dargestellten Kraftstoffbehälters eines Kraftfahrzeuges vorgesehen und hat einen an einem Hebeldraht 3 angeordneten Schwimmer 4. Der Hebeldraht 3 ist auf einem schwenkbar auf einem Träger 5 gelagerten Bügel 6 befestigt. Hierfür hat der Bügel 6 eine Bügellagerung 7 mit einer horizontalen Lagerachse auf dem Träger 5. Bei der Veränderung des Füllstandes an Kraftstoff in dem Kraftstoffbehälter folgt der Schwimmer 4 dem Kraftstoffspiegel und verschwenkt dabei den Bügel 6. Der Schwenkwinkel des Bügels 6 wird von dem Potentiometer 2 erfasst und in elektrische Signale umgesetzt.

Figur 2 zeigt vergrößert den Füllstandssensor 1 aus Figur 1. Zur Vereinfachung ist der Füllstandssensor 1 gegenüber Figur 1 um 90° gedreht dargestellt. Das Potentiometer 2 hat zwei kreisbogenförmige, auf einer Leiterplatte 8 angeordnete Leiterbahnen 9 und eine Kontaktfeder 10 zur Vorspannung von Kontakten 11 gegen die Leiterbahnen 9. Bei den Leiterbahnen 9 kann es sich wie bei einem Potentiometer um ein Widerstandsnetzwerk handeln. Die Leiterplatte 8 ist mit dem fest im Kraftstoffbehälter angeordneten Träger 5 aus Figur 1 verbunden. Die Kontaktfeder 10 hat eine Drehlagerung 12 auf dem Bügel 6. Die Achse 13 der Drehlagerung 12 ist parallel zur Bewegungsrichtung der Kontakte 11 über die Leiterbahnen 9 angeordnet. Die Drehlagerung 12 hat auf der Kontaktfeder 10 angeordnete Lageraugen 14 und auf dem Bügel 6 angeordnete Lagerzapfen 15. Weiterhin hat die Kontaktfeder 10 in Reihe angeordnete Federelemente 16, 17 zur Vorspannung der Kontakte 11 gegen die Leiterbahnen 9. Zur Verdeutlichung sind die Vorspannungen der Federelemente 16, 17 und die Bewegung der Kontaktfeder 10 an der Drehlagerung 12 mit Pfeilen gekennzeichnet.

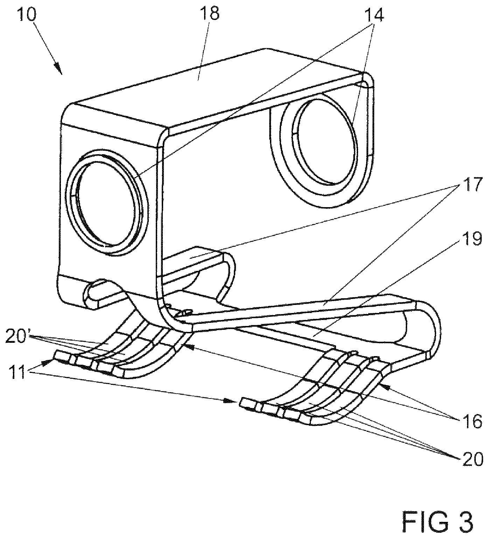

Figur 3 zeigt perspektivisch die Kontaktfeder 10 aus Figur 2. Hierbei ist zu erkennen, dass die Kontaktfeder 10 zur Erzeugung zweier Lagerungen der Drehlagerung 12 aus Figur 2 mit zwei fluchtenden Lageraugen 14, den Federelementen 16, 17 und den Kontakten 11 einstückig gefertigt ist. Die Lageraugen 14 sind über eine Brücke 18 miteinander verbunden. Die Kontaktfeder 10 hat nahe der Kontakte 11 zwei erste Federelemente 16 und nahe der Lageraugen 14 zwei zweite Federelemente 17. Die ersten Federelemente 16 sind über einen Quersteg 19 miteinander verbunden. Die Kontakte 11 setzen sich jeweils aus mehreren, nebeneinander angeordneten und parallel geschalteten Kontaktzungen 20, 20' zusammen. In einer nicht dargestellten Ausführungsform können die Kontaktzungen 20, 20' unterschiedliche Höhen aufweisen und damit unterschiedlich stark gegen die Leiterbahnen 9 vorgespannt sein.

## Patentansprüche

1. Einrichtung zur Kontaktierung zumindest einer Leiterbahn (9) eines Füllstandssensors (1) mit zumindest einem über die Leiterbahn (9) schwenkbaren Bügel (6) und mit einer auf dem Bügel (6) angeordneten Kontaktfeder (10), mit einem von einem Federelement (16, 17) der Kontaktfeder (10) gegen die Leiterbahn (9) vorgespannten Kontakt (11), wobei die Bewegung des Kontaktes (11) beim Verschwenken des Bügels (6) einem Kreisbogen entspricht und der Kontakt (11) einteilig mit dem Federelement (16, 17) der Kontaktfeder (10) gefertigt ist, **dadurch gekennzeichnet, dass** die Kontaktfeder (10) eine Drehlagerung (12) an dem Bügel (6) hat und dass die Achse (13) der Drehlagerung (12) parallel zur Bewegungsrichtung des Kontaktes (11) über den Leiterbahnen (9) angeordnet ist und dass die Achse (13) der Drehlagerung (12) mit zwei, gegen eine Leiterbahn (9) vorgespannten Kontakten (11) ein gleichseitiges Dreieck bildet.

2. Einrichtung nach Anspruch 1, **dadurch gekennzeichnet, dass** die Kontaktfeder (10) zwei einstückig gefertigte und in Reihe angeordnete erste und zweite Federelemente (16, 17) hat.

3. Einrichtung nach Anspruch 2, **dadurch gekennzeichnet, dass** die beiden Kontakte (11) jeweils unmittelbar auf einem ersten Federelement (16) angeordnet sind und dass die ersten Federelemente (16) über einen Quersteg (19) miteinander verbunden sind.

4. Einrichtung nach Anspruch 2 oder 3, **dadurch gekennzeichnet, dass** zwei zweite Federelemente (17) parallel zueinander geschaltet sind.

5. Einrichtung nach einem der Ansprüche 1 bis 4, **dadurch gekennzeichnet, dass** die Kontaktfeder (10) zwei über eine Brücke (18) miteinander verbundene Lagerungen an dem Bügel (6) hat.

6. Einrichtung nach einem der Ansprüche 1 bis 5, **dadurch gekennzeichnet, dass** die Kontaktfeder (10) Lageraugen (14) für an demBügel (6) angeordnete Lagerzapfen (15) hat.

7. Einrichtung nach Anspruch 6, **dadurch gekennzeichnet, dass** die Kontaktfeder (10) mit den Federelementen (16, 17), den Lageraugen (14) und den Kontakten (11) einstückig aus Blech geformt ist.

8. Einrichtung nach einem der Ansprüche 1 bis 7. **dadurch gekennzeichnet, dass** mehrere, parallel geschaltete Kontaktzungen (20, 20') der Kontakte (11) mit unterschiedlichen Vorspannkräften gegen die Leiterbahnen vorgespannt sind.

## Claims

1. Device for making contact with at least one conductor track (9) of a filling level sensor (1) having at least one bow (6) which can be pivoted over the conductor track (9) and having a contact spring (10) which is arranged on the bow (6), having a contact (11) which is prestressed against the conductor track (9) by a spring element (16, 17) of the contact spring (10), wherein the movement of the contact (11) during the pivoting of the bow (6) corresponds to an arc, and the contact (11) is fabricated in one piece with the spring element (16, 17) of the contact spring (10), **characterized in that** the contact spring (10) has a rotary bearing (12) on the bow (6), and **in that** the axis (13) of the rotary bearing (12) is arranged parallel to the direction of movement of the contact (11) over the conductor tracks (9) and **in that** the axis (13) of the rotary bearing (12) forms an equilateral triangle with two contacts (11) which are prestressed against a conductor track (9).

2. Device according to Claim 1, **characterized in that** the contact spring (10) has two first and second spring elements (16, 17) which are fabricated in one piece and arranged in series.

3. Device according to Claim 2, **characterized in that** the two contacts (11) are each arranged directly on a first spring element (16), and **in that** the first spring elements (16) are connected to one another via a crossweb (19).

4. Device according to Claim 2 or 3, **characterized in that** two second spring elements (17) are connected parallel to one another.

5. Device according to one of Claims 1 to 4, **characterized in that** the contact spring (10) has two bearings, connected to one another via a bridge (18), on the bow (6).

6. Device according to one of Claims 1 to 5, **characterized in that** the contact spring (10) has bearing eyelets (14) for bearing pins (15) arranged on the bow (6).

7. Device according to Claim 6, **characterized in that** the contact spring (10) is formed from sheet metal in one piece with the spring elements (16, 17), the bearing eyelets (14) and the contacts (11).

8. Device according to one of Claims 1 to 7, **characterized in that** a plurality of contact tongues (20, 20'), connected in parallel, of the contacts (11) are prestressed with different prestressing forces against the conductor tracks.

## Revendications

1. Dispositif de mise en contact d'au moins une piste conductrice (9) d'un détecteur de niveau de remplissage (1) avec au moins un étrier (6) pivotant au-dessus de la piste conductrice (9) et avec un ressort de contact (10) disposé sur l'étrier (6), comprenant un contact (11) précontraint contre la piste conductrice (9) par un élément ressort (16, 17) du ressort de contact (10), le mouvement du contact (11) lors du pivotement de l'étrier (6) correspondant à un arc de cercle et le contact (11) étant fabriqué d'un seul tenant avec l'élément ressort (16, 17) du ressort de contact (10), **caractérisé en ce que** le ressort de contact (10) possède un coussinet de rotation (12) est disposé parallèlement à la direction de mouvement du contact (11) au-dessus de la piste conductrice (9) et **en ce que** l'axe (13) du coussinet de rotation (12) au niveau de l'étrier (6) et **en ce que** l'axe (13) du coussinet de rotation (12) forme un triangle équilatéral avec deux contacts (11) précontraints contre une piste conductrice (9).

2. Dispositif selon la revendication 1, **caractérisé en ce que** le ressort de contact (10) comprend deux premiers et deuxièmes éléments ressorts (16, 17) fabriqués d'un seul tenant et disposés en ligne.

3. Dispositif selon la revendication 2, **caractérisé en ce que** les deux contacts (11) sont respectivement disposés directement sur un premier élément ressort (16) et **en ce que** les premiers éléments ressorts (16) sont reliés l'un à l'autre par le biais d'une barrette transversale (19).

4. Dispositif selon la revendication 2 ou 3, **caractérisé en ce que** deux deuxièmes éléments ressorts (17) sont branchés en parallèle l'un avec l'autre.

5. Dispositif selon l'une des revendications 1 à 4, **caractérisé en ce que** le ressort de contact (10) comporte deux coussinets au niveau de l'étrier (6), reliés l'un à l'autre par le biais d'un cavalier (18).

6. Dispositif selon l'une des revendications 1 à 5, **caractérisé en ce que** le ressort de contact (10) comporte des œillets de palier (14) pour des tenons de palier (15) disposés au niveau de l'étrier (6).

7. Dispositif selon la revendication 6, **caractérisé en ce que** le ressort de contact (10) muni des éléments ressorts (16, 17), des œillets de palier (14) et des contacts (11) sont formés d'un seul tenant en tôle.

8. Dispositif selon l'une des revendications 1 à 7, **caractérisé en ce que** plusieurs languettes de contact (20, 20') branchées en parallèle des contacts (11) sont précontraintes contre les pistes conductrices avec des forces de précontrainte différentes.
